# FASCICULE DE BREVET EUROPEEN

(11) **EP 4 166 436 B1**
(45) Date de publication et mention de la délivrance du brevet: **09.07.2025**
(21) Numéro de dépôt: 22198393.5
(22) Date de dépôt: 28.09.2022
(51) Int. Cl.: B62K 15/00, B62K 23/06, B62K 19/30

(54) **CHARNIÈRE COMPRENANT UN ORGANE DE DÉBLOCAGE**
SCHARNIER MIT EINEM ENTRIEGELUNGSORGAN
HINGE WITH A RELEASE MEMBER

(30) Priorité: 18.10.2021 FR 2111023
(43) Date de publication de la demande: 19.04.2023
(73) Titulaire: Decathlon, 59650 Villeneuve d'Ascq (FR)
(72) Inventeur: POUPART, François, 59650 Villeneuve d'Ascq (FR)
(74) Mandataire: Cabinet Beau de Loménie

(56) Documents cités:
- CN-A- 101 973 338
- CN-A- 102 407 909
- CN-A- 105 015 678
- CN-U- 201 825 190
- CN-U- 202 089 184
- CN-U- 214 029 002
- US-A- 5 440 948

## Description

### Domaine Technique

La présente invention concerne le domaine des vélos pliants et plus précisément les charnières de vélos pliant.

### Technique antérieure

Le cadre, la potence ou la tige de selle des vélos pliants comprennent de manière traditionnelle une charnière comportant une première portion de tube et une seconde portion de tube, montée pivotante par rapport à la première portion de tube. La seconde portion de tube peut être placée dans une position pliée et dans une position dépliée.

Ces charnières de vélos pliants sont généralement munies d'un élément de blocage permettant de maintenir la seconde portion de tube en position dépliée lorsqu'il est en position fermé. Un tel élément de blocage prend la forme d'un levier coopérant avec les deux portions de tube.

Pour des raisons de sécurité, de tels éléments de blocage sont maintenus en position fermée, éventuellement au moyen d'un organe de rappel, lors de l'utilisation du vélo.

Après utilisation et lorsqu'il souhaite plier le vélo, l'utilisateur est tenu d'agir sur l'élément de blocage afin de le placer dans une position ouverte, dans laquelle l'élément de blocage autorise la mise en position pliée de la seconde portion de tube.

La mise en position ouverte manuelle de l'élément de blocage peut s'avérer compliquée et nécessiter un effort important de la part de l'utilisateur. L'élément de blocage peut en outre être difficile d'accès, ce qui complique d'autant plus son ouverture.

L'utilisateur risque donc de ne pas parvenir à ouvrir correctement l'élément de blocage et de rencontrer des difficultés pour plier son vélo. L'utilisateur risque en outre de se blesser, par exemple se pincer les doigts, en manipulant un tel élément de blocage.

En outre, les charnières étant généralement disposées à proximité des roues, l'élément de blocage peut être couvert de boue. Aussi, l'actionnement du levier peut se révéler salissant pour les mains de l'utilisateur.

Le document CN 102 407 909 A décrit une charnière pour un vélo pliant selon le préambule de la revendication 1. D'autres charnières sont décrites dans les documents CN 201 825 190 U, CN 101 973 338 A et CN 105 015 678 A.

### Exposé de l'invention

Un but de la présente invention est de proposer une charnière pour vélo pliant remédiant aux inconvénients précités.

Pour ce faire, l'invention porte sur une charnière pour un vélo pliant, ladite charnière comprenant :
- une première portion de tube ;
- une seconde portion de tube montée pivotante par rapport à la première portion de tube autour d'un premier axe de pivotement entre une position dépliée et une position pliée;
- un élément de blocage monté pivotant à la première portion de tube autour d'un deuxième axe de pivotement, l'élément de blocage ayant au moins une position fermée dans laquelle il maintient la seconde portion de tube en position dépliée et une position ouverte dans laquelle il permet le déplacement en position pliée de la seconde portion de tube par pivotement de ladite seconde portion de tube par rapport à la première portion de tube autour du premier axe de pivotement;
- un organe de déblocage ayant une position de repos et une position active, l'organe de déblocage étant configuré pour amener l'élément de blocage de sa position fermée vers sa position ouverte lorsqu'il est placé en position active; et
- un dispositif d'actionnement de l'organe de déblocage, configuré pour amener l'organe de déblocage en position active.

De manière non limitative, les première et seconde portions de tube peuvent être des portions de la potence, du guidon, du cadre ou encore de la tige de selle du vélo pliant. Elles s'étendent respectivement selon une première direction longitudinale et une seconde direction longitudinale. Le premier axe de pivotement est de préférence transversal aux première et seconde directions longitudinales.

Dans la position pliée, la seconde direction longitudinale de la seconde portion de tube forme un angle avec la première direction longitudinale de la première portion de tube. Dans la position dépliée, la seconde portion de tube s'étend sensiblement dans le prolongement de la première portion de tube. La seconde direction longitudinale et la première direction longitudinale sont alors sensiblement parallèles et de préférence confondues. Dans la position dépliée, les première et seconde directions longitudinales peuvent également être légèrement inclinées l'une par rapport à l'autre, tout en restant dans le prolongement l'une de l'autre.

L'élément de blocage forme avantageusement un levier monté pivotant entre la position fermée et la position ouverte. Le deuxième axe de pivotement est de préférence parallèle au premier axe de pivotement et transversal à la première direction longitudinale de la première portion de tube.

Lorsqu'il est placé dans la position fermée, l'élément de blocage coopère avantageusement avec la seconde portion de tube pour la maintenir en position dépliée et empêcher son pliage. L'élément de blocage est alors proche de la seconde portion de tube et de préférence plaqué contre ladite seconde portion de tube. Il s'étend préférentiellement sensiblement parallèlement à ladite seconde portion de tube.

De manière non limitative, la charnière peut comprendre une pièce de connexion ayant une première partie d'extrémité montée pivotante à l'extrémité de l'élément de blocage et une seconde partie d'extrémité montée pivotante à la seconde portion de tube. Dans cette position fermée, l'élément de blocage exerce un effort sur la pièce de connexion qui transmet cet effort à la seconde portion de tube. Cet effort est dirigé sensiblement vers la première portion de tube de sorte qu'il tend à maintenir la seconde portion de tube en position dépliée.

Dans la position ouverte, l'élément de blocage est de préférence incliné par rapport à la seconde portion de tube.

De manière non limitative, l'organe de déblocage peut être monté sur la première portion de tube ou sur la seconde portion de tube. Il s'étend de préférence entre la portion de tube sur laquelle il est monté et l'élément de blocage. L'organe de déblocage présente de préférence la forme d'une came et est apte à exercer un effort sur l'élément de blocage lorsqu'il est placé en position active. Cet effort entraine l'élément de blocage de sa position fermée vers sa position ouverte.

De manière non limitative, l'organe de déblocage peut définir un mouvement de rotation ou encore un mouvement de translation entre la position de repos et la position active.

A l'aide du dispositif d'actionnement, l'utilisateur peut aisément et rapidement activer l'organe de déblocage et donc amener l'élément de blocage en position ouverte.

Aussi, l'organe de déblocage et le dispositif d'actionnement de la charnière selon l'invention permettent à l'utilisateur de s'affranchir d'une ouverture manuelle de l'élément de blocage. En d'autres mots, il n'est pas tenu de se pencher et d'agir directement sur ledit organe de déblocage. Les efforts à réaliser pour mettre l'élément de blocage en position ouverte sont réduits et le pliage du vélo est facilité.

En outre, l'utilisateur ne risque pas de se salir les mains ou de se blesser dans la mesure où il n'est pas tenu de toucher l'élément de blocage.

Dans la position de repos, l'organe de déblocage n'entraine pas l'élément de blocage vers sa position ouverte, de sorte que ce dernier peut être placé en position fermée.

Le dispositif d'actionnement peut avantageusement être déporté par rapport à l'organe de déblocage. De manière non limitative, le dispositif d'actionnement peut être disposé au niveau du guidon ou de la potence du vélo pliant de sorte qu'il est aisément accessible et peut être activé facilement par l'utilisateur, notamment monté sur ledit vélo.

De manière avantageuse, la charnière comprend un dispositif de rappel configuré pour amener l'organe de déblocage de la position active vers la position de repos, lorsque le dispositif d'actionnement n'est pas actionné. Un intérêt est de faciliter la mise en position de repos de l'organe de déblocage. Un autre intérêt est de s'affranchir du risque d'oublier d'amener l'organe de déblocage en position de repos, ce qui permet d'éviter que l'organe de déblocage ne maintienne l'élément de blocage en position ouverte lorsque ceci n'est pas souhaitable, par exemple lorsque le vélo est en utilisation.

Le risque de pliage intempestif du vélo est réduit et la sécurité de l'utilisateur est donc améliorée.

De manière non-limitative, le dispositif de rappel peut comprendre un ressort de rappel, par exemple un ressort de compression, coopérant avec l'organe de déblocage.

Préférentiellement, l'organe de déblocage est monté pivotant par rapport à la seconde portion de tube autour d'un troisième axe de pivotement, parallèle au deuxième axe de pivotement de l'élément de blocage. En d'autres mots, l'organe de déblocage est pivotant entre la position de repos et la position active selon ce troisième axe de pivotement. Lorsqu'il est amené en position active, par pivotement, l'organe de déblocage exerce avantageusement un effort de poussée sur l'élément de blocage, ayant pour conséquence de faire pivoter l'élément de blocage de la position fermée vers la position ouverte.

De manière non limitative, la mise en rotation de l'organe de déblocage dans un premier sens de rotation entraine la mise en rotation de l'élément de blocage dans un second sens de rotation. En variante, la mise en rotation de l'organe de déblocage dans un premier sens de rotation entraine la mise en rotation de l'élément de blocage dans ce même premier sens de rotation.

Le troisième axe de pivotement est de préférence parallèle au premier axe de pivotement et transversal à la seconde direction longitudinale de la seconde portion de tube. Lorsque la seconde portion de tube est dépliée, considérés en projection dans un plan passant par les premier et deuxième axes de pivotement, le troisième axe de pivotement s'étend avantageusement entre lesdits premier et deuxième axes de pivotement.

Entre la position de repos et la position active, l'organe de déblocage décrit de préférence une rotation d'un angle compris entre 60° et 180°, encore de préférence entre 90° et 180°, encore de préférence une rotation d'environ 90°.

Avantageusement, la seconde portion de tube comprend une portion de montage définissant un logement, l'organe de déblocage étant monté pivotant sur ladite portion de montage et s'étendant au moins en partie dans ledit logement. Un intérêt de cette portion de montage formant logement est de protéger l'organe de déblocage, notamment de la pluie, ce qui réduit les risques d'usure.

De préférence, l'organe de déblocage s'étend sensiblement entièrement dans ledit logement de la portion de montage lorsque ledit organe de déblocage est dans la position de repos. Encore de préférence, l'organe de déblocage s'étend en partie hors dudit logement lorsqu'il est placé dans la position active.

En outre, la portion de montage encadre l'organe de déblocage et forme une protection réduisant les risques de se blesser et notamment de se pincer avec l'organe de déblocage.

Dans la position de repos, l'organe de déblocage s'étend de préférence sensiblement entièrement dans le logement. Dans la position active, l'organe de déblocage peut faire saillie en partie hors du logement.

La portion de montage comprend de préférence au moins deux parois latérales traversées par le troisième axe de pivotement.

Préférentiellement, la portion de montage fait saillie depuis une surface extérieure de la seconde portion de tube. Un intérêt est de rendre l'organe de déblocage facilement accessible s'il est nécessaire d'y apporter des réparations.

On comprend que la portion de montage fait saillie radialement depuis ladite surface extérieure de la seconde portion de tube. De manière non limitative, la portion de montage peut s'étendre entièrement hors de la seconde portion de tube.

De préférence, la portion de montage s'étend au moins en partie à l'intérieur de la seconde portion de tube. Un intérêt est d'améliorer la compacité de la charnière. Alternativement, mais de manière non limitative, la portion de montage peut s'étendre entièrement à l'intérieur de la seconde portion de tube.

De manière avantageuse, l'organe de déblocage comprend une portion de poussée configurée pour pousser l'élément de blocage afin d'amener ledit élément de blocage de sa position fermée vers sa position ouverte, lorsque l'organe de déblocage est amené de sa position de repos vers sa position active. L'effort exercé par la portion de poussée de l'organe de déblocage sur l'élément de blocage a pour conséquence de faire pivoter ledit élément de blocage depuis sa position fermée vers sa position ouverte. Cet effort est supérieur à la force de rappel exercée par un éventuel ressort tendant maintenir l'élément de blocage en position fermée.

Ladite portion de poussée s'étend de préférence sensiblement parallèlement à l'élément de blocage et à la seconde portion de tube lorsque l'organe de déblocage est en position de repos.

De préférence, lorsque l'organe de déblocage est monté pivotant par rapport à la seconde portion de tube, ladite portion de poussée pivote également par rapport à la seconde portion de tube autour du troisième axe de pivotement. Lorsque ledit organe de déblocage est amené de la position de repos à la position active, la portion de poussée pivote selon ledit troisième axe de pivotement et s'éloigne de la seconde portion de tube, afin de pousser l'élément de blocage.

De préférence, mais de manière non limitative, la portion de poussée s'étend de préférence entre le troisième axe de pivotement et la seconde portion de tube, lorsque la seconde portion de tube est en position dépliée. En variante, le troisième axe de pivotement peut s'étendre entre la portion de poussée et la seconde portion de tube, lorsque ladite seconde portion de tube est en position dépliée.

Selon l'invention, l'organe de déblocage comprend une portion de tirage et le dispositif d'actionnement est configuré pour tirer sur ladite portion de tirage de l'organe de déblocage afin de l'amener en position active. De manière non limitative, la traction exercée par le dispositif d'actionnement sur la portion de tirage peut entrainer le déplacement de l'organe de déblocage en rotation ou en translation.

L'effort de traction est de préférence dirigé vers le dispositif d'actionnement et notamment vers le guidon du vélo, lorsque le dispositif d'actionnement est monté sur ledit guidon. L'effort de traction est de préférence orienté transversalement au troisième axe de pivotement.

La portion de tirage permet de décupler l'effort exercé par le dispositif d'actionnement, à la manière d'un levier, facilitant ainsi la mise en position active de l'organe de déblocage et donc l'ouverture de l'élément de blocage.

Préférentiellement, la portion de tirage de l'organe de déblocage s'étend radialement depuis le troisième axe de pivotement, de sorte que l'organe de déblocage est entrainé en rotation autour du troisième axe de pivotement lorsque le dispositif d'actionnement tire sur ladite portion de tirage.

De préférence, l'organe de déblocage comprend une portion coudée située entre la portion de tirage et la portion de poussée, ladite portion coudée étant traversée par le troisième axe de pivotement.

La portion de tirage et la portion de poussée s'étendent donc radialement depuis ledit troisième axe de pivotement et donc transversalement audit troisième axe de pivotement.

La portion de tirage et la portion de poussée s'étendent de préférence transversalement l'une par rapport à l'autre de sorte que l'organe de déblocage présente sensiblement la forme d'un « L ».

De préférence, la portion de tirage et la portion de poussée définissent un angle compris entre 90° et 180°, encore de préférence compris entre 110° et 140°, et encore de préférence un angle environ égal à 120°.

La portion de tirage présente de préférence une longueur inférieure à la moitié de la longueur de la portion de poussée.

Un effort de traction exercé sur la portion de tirage selon une direction de tirage sensiblement transversale au troisième axe de pivotement permet de faire pivoter la portion de tirage et la portion de poussée et donc d'amener l'organe de déblocage vers la position active.

Avantageusement, la portion de tirage et la portion de poussée de l'organe de déblocage s'étendent de part et d'autre de la portion de montage, lorsque l'organe de déblocage est en position active. Un intérêt est d'améliorer la compacité de la charnière.

De manière non limitative, la portion de tirage et la portion de poussée peuvent s'étendre de part et d'autre d'un plan parallèle à la seconde direction longitudinale de la seconde portion de tube et passant par le troisième axe de pivotement.

De préférence, mais de manière non limitative, considérés en projection dans un plan transversal à la seconde direction longitudinale de la seconde portion de tube et passant par le troisième axe de pivotement la portion de tirage s'étend entre l'élément de blocage et le troisième axe de pivotement. La portion de tirage s'étend alors à l'intérieur de la seconde portion de tube.

En variante, mais de manière non limitative, considérés en projection dans un tel plan transversal à la seconde direction longitudinale de la seconde portion de tube et passant par le troisième axe de pivotement, ledit troisième axe de pivotement s'étend entre la portion de tirage et l'élément de blocage.

De préférence, le dispositif d'actionnement comprend un organe de commande et une portion de câble ayant une première extrémité reliée à l'organe de commande et une seconde extrémité reliée à la portion de tirage de l'organe de déblocage.

Une action sur l'organe de commande entraine le déplacement de la portion de câble vers ledit organe de commande, ce qui a pour effet d'exercer un effort de traction sur la portion de tirage de l'organe de déblocage. La portion de tirage est alors entrainée en rotation ou en translation et l'organe de déblocage est amené aisément de la position de repos à la position active.

De manière non limitative, la portion de câble peut s'étendre le long de la seconde portion de tube ou à l'intérieur de ladite seconde portion de tube.

De manière avantageuse mais non limitative, l'organe de commande présente la forme d'un levier ou d'un élément pivotant, par exemple une poignée.

L'organe de commande est de préférence configuré pour être monté à proximité du guidon d'un vélo pliant. De cette manière, l'organe de commande est accessible pour le cycliste monté sur le vélo. Le pliage de la seconde portion de tube et donc du vélo est facilité.

L'organe de commande peut également être disposé sur la potence du vélo pliant.

De préférence, l'élément de blocage comprend une portion de réception et l'organe de déblocage comprend en outre une portion de verrouillage configurée pour coopérer avec la portion de réception afin de maintenir l'élément de blocage en position fermée lorsque l'organe de déblocage est en position de repos. Ladite portion de verrouillage réalise alors une fonction de verrouillage et permet d'éviter l'ouverture involontaire de l'élément de blocage et donc le pliage involontaire de la seconde portion de tube par rapport à la première portion de tube. Pour le cycliste, les risques de blessure sont donc réduits. De manière non limitative, l'ouverture de l'élément de blocage n'est possible qu'en activant l'organe de déblocage et donc en agissant sur le dispositif d'actionnement.

De préférence, la portion de réception fait saillie depuis une surface intérieure de l'élément de blocage.

La portion de verrouillage s'oppose avantageusement au pivotement de l'élément de blocage vers sa position ouverte.

De préférence, la portion de verrouillage et la portion de réception sont configurées de sorte que la coopération entre ladite portion de verrouillage et ladite portion de réception est interrompue lorsque l'organe de déblocage est amené en position active. La mise en position active de l'organe de déblocage permet donc réaliser un déverrouillage de l'élément de blocage tout en amenant ledit élément de blocage vers sa position ouverte.

De manière avantageuse, la portion de réception comprend un épaulement et la portion de verrouillage présente la forme d'un crochet comprenant une partie d'engagement configurée pour coopérer avec ledit épaulement lorsque l'organe de déblocage est en position de repos. Un intérêt est de verrouiller d'autant plus efficacement l'élément de blocage en position fermée. Lorsque l'organe de déblocage est en position de repos et qu'un effort est exercé sur l'élément de blocage visant à l'amener en position ouverte, ledit épaulement vient avantageusement en butée contre ladite partie d'engagement.

Selon un aspect particulièrement avantageux de l'invention, considérés dans un plan perpendiculaire au deuxième axe de pivotement, ledit épaulement et ladite partie d'engagement s'étendent radialement par rapport à un cercle ayant pour centre le deuxième axe de pivotement et passant par ladite portion de verrouillage. Un intérêt est d'améliorer la coopération entre la partie d'engagement et l'épaulement afin d'empêcher d'autant plus efficacement l'ouverture de l'élément de blocage lorsque l'organe de déblocage est en position de repos.

Avantageusement, ledit cercle passe sensiblement par le troisième axe de pivotement de l'organe de déblocage par rapport à la seconde portion de tube. Un intérêt est de limiter les frottements entre la partie d'engagement et l'épaulement lors du passage de la position active à la position de repos de l'organe de déblocage et vice-versa.

L'invention porte également sur un vélo pliant comprenant au moins une charnière telle que décrite précédemment.

De préférence, le vélo pliant comprend en outre une deuxième charnière telle que décrite précédemment, le dispositif d'actionnement de l'organe de déblocage de cette deuxième charnière comprenant un câble d'actionnement présentant une première partie d'extrémité fixée à l'une des première et seconde portions de tube de ladite première charnière, et une seconde partie d'extrémité reliée à l'organe de déblocage de la deuxième charnière, ledit dispositif d'actionnement de l'organe de déblocage de la deuxième charnière étant configuré pour amener l'organe de déblocage de la deuxième charnière en position active lors du pivotement de la seconde portion de tube de la première charnière par rapport à la première portion de tube de la première charnière.

Un intérêt est de permettre l'activation aisée de l'organe de déblocage de la deuxième charnière en faisant pivoter la seconde portion de tube de la première charnière par rapport à la première portion de tube de la première charnière. Après avoir placé l'élément de blocage de la première charnière en position ouverte, l'utilisateur plie la seconde portion de tube de la première charnière ce qui conduit à l'ouverture de l'élément de blocage de la deuxième charnière. L'utilisateur n'est donc pas tenu d'agir sur un organe de commande distinct pour activer l'organe de déblocage de la deuxième charnière. Autrement dit, le pliage de la première charnière autorise le pliage de la deuxième charnière, permettant de réaliser un pliage progressif du vélo.

Un autre intérêt est de réduire le risque de pliage intempestif de la deuxième charnière, dans la mesure où l'organe de déblocage de cette dernière ne peut être amené en position active qu'après pliage de la première charnière.

Le câble d'actionnement s'étend avantageusement dans une gaine. De manière non limitative, l'activation de l'organe de déblocage de la deuxième charnière peut être réalisée en tirant sur le câble d'actionnement ou en poussant sur la gaine à l'intérieur de laquelle il s'étend.

Lesdites première et deuxième charnières peuvent être deux charnières du cadre du vélo ou encore des charnières de la tige de selle ou de la potence du vélo.

### Brève description des dessins

L'invention sera mieux comprise à la lecture de la description qui suit d'un mode de réalisation de l'invention donné à titre d'exemple non limitatif, en référence aux dessins annexés, sur lesquels :
[Fig. 1]la figure **1** illustre une portion de cadre de vélo munie d'une charnière pour vélo pliant selon l'invention;
[Fig. 2]la figure **2** illustre la charnière de la figure **1****,** l'organe de déblocage étant en position de repos;
[Fig. 3]la figure **3** est une vue de côté de la charnière de la figure **1****,** l'organe de déblocage étant en position de repos ;
[Fig. 4]la figure **4** illustre la portion de réception et la portion de verrouillage de la charnière de la figure **1****;**
[Fig. 5]la figure **5** illustre la charnière de la figure **1****,** l'organe de déblocage étant en position active;
[Fig. 6]la figure **6** est une vue de côté de la charnière de la figure **1****,** l'organe de déblocage étant en position active;
[Fig. 7]la figure **7** illustre la charnière de la figure **1****,** la seconde portion de tube étant en position pliée ;
[Fig. 8]la figure **8** illustre la première charnière d'une variante du vélo de la figure **1** ; et
[Fig. 9]la figure **9** illustre la deuxième charnière du vélo de la figure **8****.**

### Description des modes de réalisation

L'invention porte sur une charnière pour vélo pliant comprenant un organe de déblocage permettant de placer un élément de blocage en position ouverte lorsqu'il est activé.

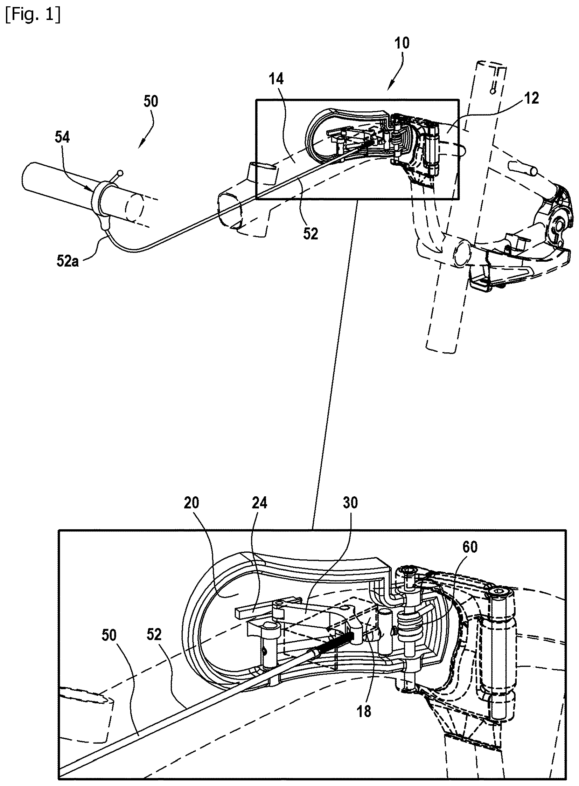

La figure **1** illustre une portion de cadre d'un vélo pliant munie d'une charnière **10** selon l'invention.

On constate que la charnière **10** comprend une première portion de tube **12,** une seconde portion de tube **14,** un élément de blocage **20,** un organe de déblocage **30** et un dispositif d'actionnement **50.**

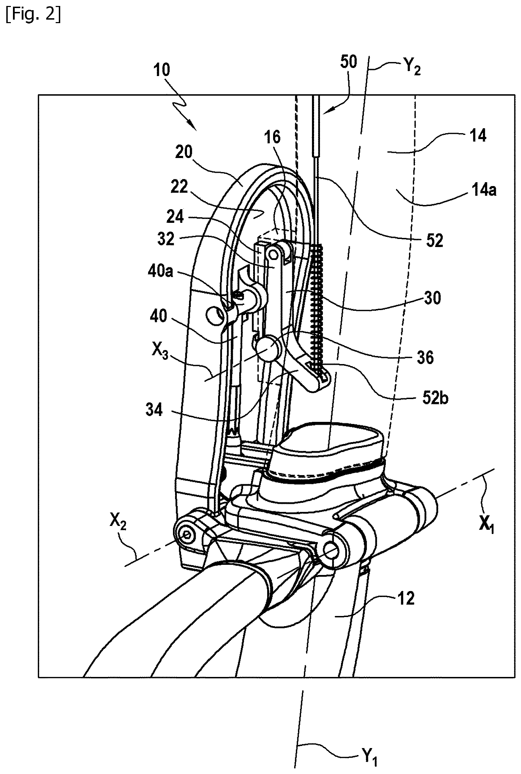

Dans cet exemple non limitatif, la première portion de tube **12** et la seconde portion de tube **14** sont des portions du tube supérieur du cadre du vélo. Sans sortir du cadre de l'invention, ces première et seconde portions de tube **12,14** peuvent être des portions de tube de la tige de selle, de la potence ou encore du guidon du vélo. Tel qu'illustré en figure **2****,** la première portion de tube **12** est cylindrique et s'étend selon une première direction longitudinale **Y₁.** La seconde portion de tube **14** est également cylindrique et s'étend selon une seconde direction longitudinale **Y₂**.

Pour des raisons de visibilité, les première et seconde portions de tube **12,14** sont illustrées en pointillées et sont montrées transparentes sur les figures **1**à **7****.**

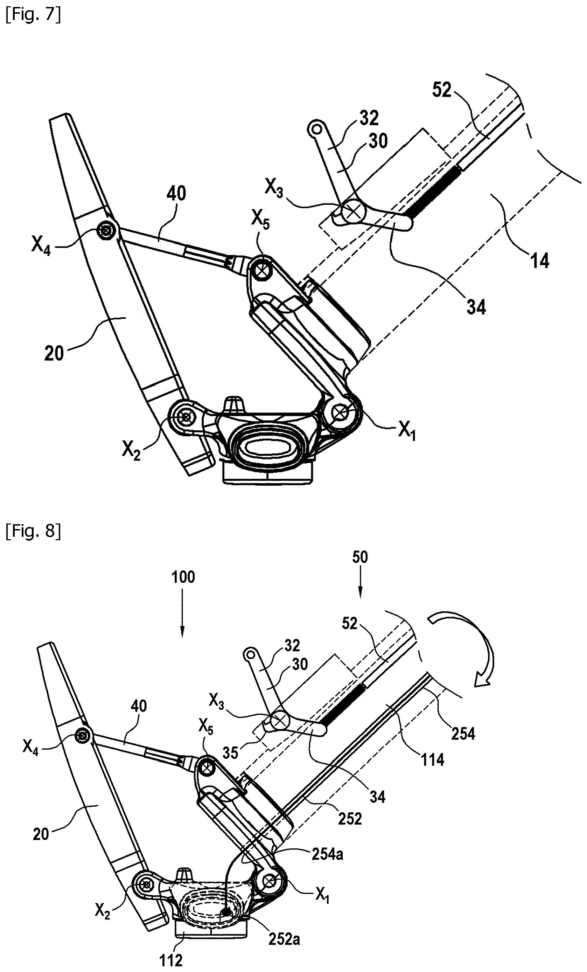

Comme on le constate sur la figure **2****,** la seconde portion de tube **14** est montée pivotante par rapport à la première portion de tube **12** autour d'un premier axe de pivotement **X₁**, entre une position pliée et une position dépliée. Sur les figures **1**à **6****,** la seconde portion de tube **14** est montrée en position dépliée, dans laquelle elle s'étend dans le prolongement de la première portion de tube **12.** En position pliée, illustrée en figure **7****,** la seconde portion de tube **14** ne s'étend plus dans le prolongement de la première portion de tube **12** et forme un angle avec cette dernière.

L'élément de blocage **20** présente sensiblement la forme d'un parallélépipède rectangle. Il forme un levier.

En se référant à la figure **2****,** on constate que l'élément de blocage **20** est monté pivotant par rapport à la première portion de tube **12** selon un deuxième axe de pivotement **X₂**. Le premier axe de pivotement **X₁** et le deuxième axe **X₂** de pivotement sont diamétralement opposés et s'étendent de part et d'autre de la première portion de tube **12.** Ils sont en outre parallèles entre eux. Un logement **22** est ménagé dans l'élément de blocage **20.**

L'organe de déblocage **30** est monté pivotant par rapport à la seconde portion de tube **14** selon un troisième axe de pivotement **X₃**. Le troisième axe de pivotement **X₃** est parallèle aux premier et deuxième axes de pivotement **X₁,X₂.** Plus précisément, dans cet exemple non limitatif, l'organe de déblocage **30** est monté pivotant par rapport à une portion de montage **16** de la seconde portion de tube selon ce troisième axe de pivotement.

Ladite portion de montage **16** définit un logement **18** au sein duquel s'étend en partie l'organe de déblocage **30.** La portion de montage **16** comprend deux parois latérales traversées par le troisième axe de pivotement **X₃**. Dans cet exemple non limitatif, la portion de montage **16** fait saillie depuis une surface extérieure **14a** de la seconde portion de tube **14.**

L'organe de déblocage **30** comprend une portion de poussée **32** configurée pour pousser l'élément de blocage **20.** L'organe de déblocage comprend en outre une portion de tirage **34** et une portion coudée **36** s'étendant entre la portion de poussée **32** et la portion de tirage **34.** La portion coudée est traversée par le troisième axe de pivotement **X₃**. La portion de poussée **32** et la portion de tirage **34** font saillie radialement depuis le troisième axe de pivotement, transversalement audit troisième axe de pivotement **X₃**.

La portion de tirage **34** et la portion de poussée **32** s'étendent transversalement l'une par rapport à l'autre. Elles définissent un angle compris entre 110° et 140°, de préférence environ égal à 120°. Aussi, l'organe de déblocage présente sensiblement la forme d'un « L ».

Dans cet exemple non limitatif, la portion de tirage **34** s'étend en partie à l'intérieur de la seconde portion de tube **14,** dans une cavité ménagée dans ladite seconde portion de tube.

Lorsque la seconde portion de tube **14** est dans la position dépliée, telle qu'illustrée en figures **1**à **6****,** l'organe de déblocage **30** s'étend entre la seconde portion de tube **14** et l'élément de blocage **20.** De plus, dans cette position et considérés en projection dans un plan passant par les premier et deuxième axes de pivotement **X₁,X₂,** le troisième axe de pivotement **X₃** s'étend entre lesdits premier et deuxième axe de pivotement. En outre, de manière non limitative, lorsque la seconde portion de tube est dépliée et considérés dans ledit plan passant par les premier et deuxième axes de pivotement **X₁,X₂,** la portion de tirage s'étend entre le troisième axe de pivotement **X₃** et le premier axe de pivotement **X₁.**

Tel qu'illustré en figure **1****,** le dispositif d'actionnement **50** comprend un organe de commande **54** et une portion de câble **52** ayant une première extrémité **52a** reliée à l'organe de commande et une seconde extrémité **52b** reliée à la portion de tirage **34** de l'organe de déblocage **20.**

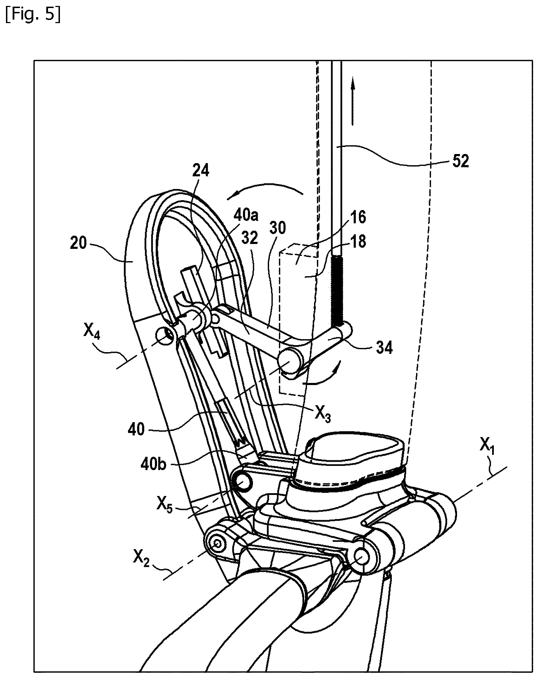

Dans cet exemple non limitatif, la charnière **10** comprend en outre une pièce de connexion **40** en forme de tige illustrée notamment en figure **5****.** Ladite pièce de connexion **40** présente une première partie d'extrémité **40a** montée pivotante par rapport à l'extrémité de l'élément de blocage **20** selon un quatrième axe de pivotement **X₄** et une seconde partie d'extrémité **40b** montée pivotante par rapport à la seconde portion de tube **14** selon un cinquième axe de pivotement **X₅.**

La charnière **10** comprend de plus un ressort **60,** visible en figure **1****,** configuré pour amener l'élément de blocage vers la seconde portion de tube **14.**

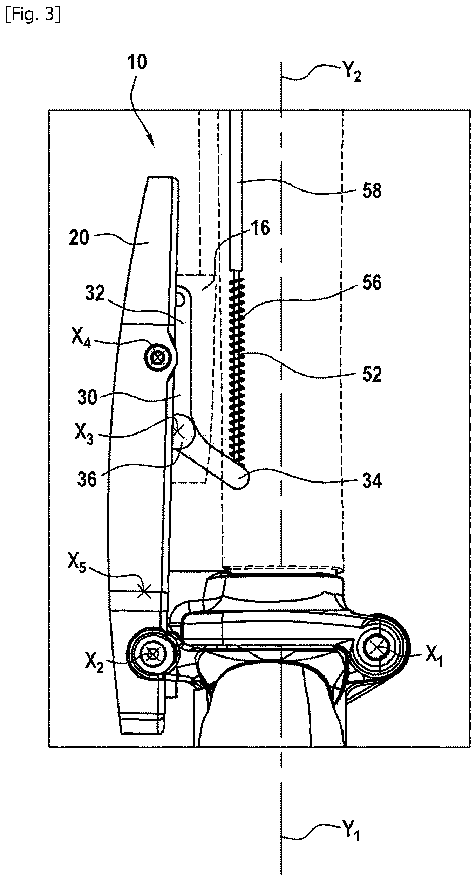

Sur les figures **2** et **3****,** la seconde portion de tube **14** est en position dépliée et l'organe de déblocage **30** est en position de repos. Par ailleurs, l'élément de blocage **20** est en position fermée de sorte qu'il maintient la seconde portion de tube **14** en position dépliée.

Plus précisément, en position fermée, l'élément de blocage **20** est plaqué contre la portion de montage **16** de la seconde portion de tube **14,** et s'étend sensiblement parallèlement à la seconde direction longitudinale **Y₂** de la seconde portion de tube **14.**

Sur la figure **3****,** on constate que lorsque l'élément de blocage **20** est en position fermée, les premier, troisième et quatrième axes de pivotement **X₁, X₃, X₄** s'étendent d'un même côté du plan passant par les deuxième et cinquième axes de pivotement **X₂, X₅.**

En se référant à la figure **2****,** on constate que dans cette position fermée, la pièce de connexion **40** s'étend dans le logement **22** ménagé dans l'élément de blocage **20.** L'élément de blocage **20** exerce un effort sur la première partie d'extrémité **40a** de la pièce de connexion **40,** qui transmet cet effort à la seconde portion de tube **14.** Cet effort est dirigé sensiblement vers la première portion de tube **12** de sorte qu'il maintient la première portion de tube et la seconde portion de tube en position dépliée. Si un effort est exercé sur la seconde portion de tube **14,** tendant à amener cette dernière en position pliée, l'effort est transmis à l'élément de blocage **20** via la pièce de connexion **40.** Cet effort tend à rapprocher d'autant plus l'élément blocage de la seconde portion de tube et donc à maintenir ledit élément de blocage en position fermée et les première et seconde portions de tube en position dépliée.

L'élément de blocage **20** maintient donc efficacement les première et seconde portions de tube **12,14** en position dépliée, même en présence d'une force tendant à faire pivoter la seconde portion de tube **14** par rapport à la première portion de tube **12.**

Sur les figures **2** et **3****,** l'organe de déblocage **30** est en position de repos. Sa portion de poussée **32** s'étend sensiblement parallèlement à la seconde direction longitudinale **Y₂** de la seconde portion de tube **14.** Dans cette position de repos, la portion de poussée **32** s'étend en outre à l'intérieur de la portion de montage **16** et sensiblement parallèlement à l'élément de blocage **20,** de sorte qu'elle n'exerce pas d'effort de poussée sur ce dernier.

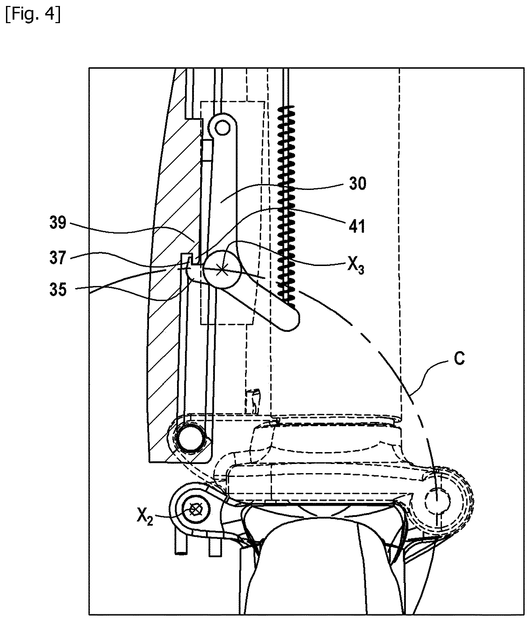

Comme on le constate sur la figure **4****,** l'organe de déblocage **30** comprend en outre une portion de verrouillage **35** s'étendant radialement depuis le troisième axe de pivotement **X₃**. Cette portion de verrouillage **35** forme un angle avec la portion de poussée **32** et la portion de tirage **34,** d'un angle compris entre 100 et 140°, de préférence environ égal à 120°. La portion de verrouillage **35** présente la forme d'un crochet comprenant une partie d'engagement **37.** La partie d'engagement **37** s'étend tangentiellement à un cercle passant par la portion de verrouillage **35** et dont le centre est l'axe **X₃**. La face intérieure de l'élément de blocage **20** est en outre munie d'une portion de réception **39** comprenant un épaulement **41.**

Dans la position de repos de l'organe de déblocage **30,** illustrée en figure **4****,** la partie d'engagement **37** de la portion de verrouillage **35** coopère avec l'épaulement **41** afin de maintenir l'élément de blocage en position fermée.

Considérés dans un plan transversal au deuxième axe de pivotement **X₂,** l'épaulement **41** et la partie d'engagement s'étendent radialement par rapport à un cercle **C** ayant pour centre ledit deuxième axe de pivotement et passant par la portion de verrouillage **35.** Un intérêt est que, lorsque l'organe de déblocage **30** est en position de repos et qu'un effort est exercé sur l'élément de blocage **20** tendant à le faire pivoter vers sa position ouverte, ledit épaulement bute sur ladite partie d'engagement, empêchant efficacement l'ouverture dudit élément de blocage.

On constate en outre que ledit cercle **C** passe sensiblement par le troisième axe de pivotement **X₃** de l'organe de déblocage **20** par rapport à la seconde portion de tube **14,** facilitant la mise en coopération et l'interruption de la coopération entre la partie d'engagement **37** et l'épaulement **41** lors du pivotement de l'organe de déblocage.

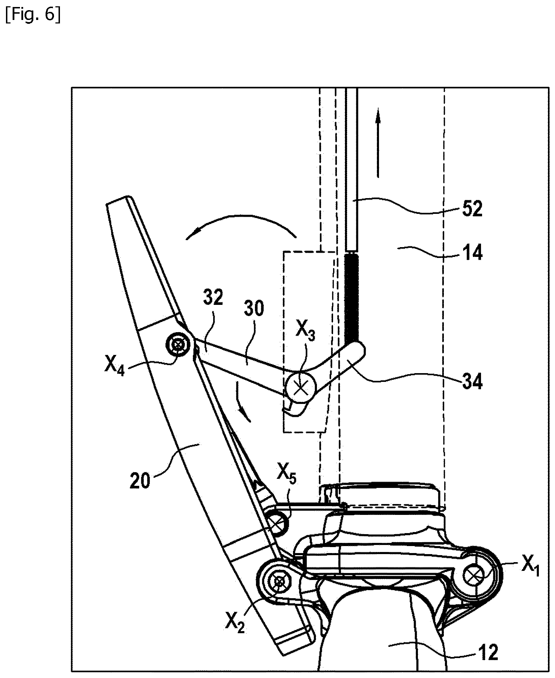

Afin de plier la seconde portion de tube **14,** l'utilisateur doit d'abord placer l'élément de blocage **20** dans la position ouverte. Pour cela l'utilisateur actionne le dispositif d'actionnement **50** en agissant sur l'organe de commande **54.** Ceci a pour conséquence de tirer sur la portion de câble **52,** en direction de l'organe de commande. Un effort de traction est exercé par la portion de câble **52** sur la portion de tirage **34** de l'organe de déblocage **30.** L'organe de déblocage **30** est alors entrainé en rotation autour du troisième axe de pivotement **X₃,** dans un premier sens de rotation, jusqu'en une position active, tel qu'illustré par le passage des figures **2** et **3** aux figures **5** et **6****.**

Lorsque l'organe de déblocage **30** est placé en position active, sa portion de verrouillage **35** pivote autour du troisième axe de pivotement **X₃,** de sorte que la partie d'engagement **37** ne coopère plus avec l'épaulement **41** de la portion de réception **39.** Ladite portion de verrouillage **35** n'empêche plus la mise en position ouverte de l'élément de blocage **20.**

En outre, lors de la mise en position active de l'organe de déblocage **30,** sa portion de poussée **32** pivote également autour du troisième axe de pivotement **X₃** et prend appui sur une surface intérieure, et plus précisément sur une portion d'appui **24** de l'élément de blocage **20,** visible en figure **5****.** De manière non limitative, la portion d'appui **24** forme une seule pièce avec la portion de réception **39.** La portion de poussée **32,** et notamment son extrémité distale, pousse l'élément de blocage **20** dans une direction opposée à la seconde portion de tube **14.** Cet effort de poussée entraine l'élément de blocage **20** en rotation jusqu'en une position ouverte illustrée en figures **5** et **6****.**

Grâce à l'invention, l'utilisateur peut amener l'élément de blocage **20** en position ouverte en agissant sur le dispositif d'actionnement **50** et n'a pas besoin de toucher ledit élément de blocage.

Comme on peut le voir en figure **6****,** dans la position active de l'organe de déblocage **30,** la portion de tirage **34** et la portion de poussée **32** s'étendent de part et d'autre de la portion de montage **16** de la seconde portion de tube **14.** En outre, la portion de tirage **34** et la portion de poussée **32** s'étendent de part et d'autre d'un plan parallèle à la seconde direction longitudinale **Y₂** de la seconde portion de tube et passant par le troisième axe de pivotement **X₃**.

Dans la position ouverte, l'élément de blocage **20** est écarté et éloigné de la seconde portion de tube **14.** Les premier **X₁** et quatrième **X₄** axes de pivotement s'étendent alors de part et d'autre d'un plan passant par les deuxième **X₂** et cinquième **X₅** axes de pivotement.

Tel qu'illustré en figure **7****,** l'élément de blocage **20** en position ouverte autorise le pivotement de la seconde portion de tube **14** par rapport à la première portion de tube **12** autour du premier axe de pivotement **X₁** et donc la mise en position pliée de la seconde portion de tube.

La charnière comprend en outre un dispositif de rappel **56** configuré pour amener l'organe de déblocage **30** de la position active vers la position de repos, lorsque le dispositif d'actionnement n'est pas actionné. Dans cet exemple non limitatif, le dispositif de rappel comprend un ressort **56,** type ressort de compression, disposé autour de la portion de câble **52** et s'étendant le long de la dite portion de câble. Le ressort présente une première extrémité fixe par rapport à la portion de câble **52,** prenant appui sur une gaine **58** dans laquelle s'étend la portion de câble **52.** Le ressort comprend en outre une seconde extrémité prenant appui sur la portion de tirage **34** de l'organe de déblocage.

Lorsque l'organe de déblocage est en position de repos, tel qu'illustré en figure **3****,** ledit ressort n'est pas comprimé. Lorsque l'organe de déblocage est en position active, la portion de câble est tirée à l'intérieur de la gaine de sorte que ledit ressort **56** est comprimé. Le ressort exerce alors un effort de poussée sur la portion de tirage **34,** tendant à amener l'organe de déblocage **30** en position de repos, tel qu'illustré en figure **6****.**

Aussi, lorsque la portion de câble **52** n'est plus tirée, ledit ressort **56** fait pivoter ladite portion de tirage de sorte que l'organe de déblocage revient en position de repos.

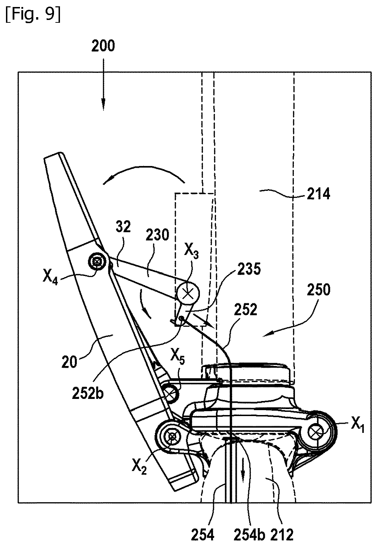

Les figures **8** et **9** illustrent une variante d'un vélo selon l'invention, ledit vélo comprenant deux charnières, à savoir une première charnière **100** illustrée en figure **8** et une deuxième charnière **200** illustrée en figure **9****.** Sans sortir du cadre de l'invention, et de manière non limitative, ces charnières **100,200** peuvent être disposées sur le cadre, la potence ou encore la tige de selle du vélo.

La première charnière **100,** illustrée en figure **8****,** est similaire à la charnière **10** des figures **1** à **7****.** Elle comprend une première portion de tube **112** et une seconde portion de tube **114** montée pivotante par rapport à la première portion de tube.

La deuxième charnière **200,** illustrée en figure **9****,** comprend une première portion de tube **212,** qui est fixe par rapport à la seconde portion de tube **114** de la première charnière **100.** La deuxième charnière **200** comprend en outre une seconde portion de tube **214** qui est montée pivotante par rapport à la première portion de tube **212** autour d'un premier axe de pivotement **X₁**.

Cette deuxième charnière **200** diffère de la première charnière en ce que l'organe de déblocage **230** comprend une portion de verrouillage **235** qui forme également une portion de tirage. En outre, le dispositif d'actionnement **250** de cette deuxième charnière **200** comprend un câble d'actionnement **252** ayant une première partie d'extrémité **252a** et une seconde partie d'extrémité **252b.**

Dans cet exemple non limitatif, et comme on peut le voir en figure **8****,** la première partie d'extrémité **252a** du câble d'actionnement **252** est fixée à la première portion de tube **112** de la première charnière **100.** Pour ce faire, le câble d'actionnement **252** comprend une tête de câble qui est logée dans un logement formé dans ladite première portion de tube **112.** La seconde partie d'extrémité **252b** dudit câble d'actionnement **252** est reliée à la portion de verrouillage **235** de l'organe de déblocage **230** de la deuxième charnière **200.** Le câble d'actionnement **252** s'étend à l'intérieur d'une gaine **254.** Cette gaine **254** présente une première partie d'extrémité **254a** prenant appui sur une surface de la seconde portion de tube **114** de la première charnière **100** formant une butée de gaine. La gaine **254** présente en outre une deuxième partie d'extrémité **254b,** opposée à la première partie d'extrémité, opposée à la première partie d'extrémité, prenant appui sur une surface de la première portion de tube **212** de la deuxième charnière, formant une butée de gaine.

De manière non limitative, le câble d'actionnement **252** et la gaine **254** s'étendent à l'intérieur de la seconde portion de tube **114** de la première charnière **100** et à l'intérieur de la première portion de tube **212** de la deuxième charnière **200.**

Lors du pivotement de la seconde portion de tube **114** de la première charnière **100** par rapport à la première portion de tube **112** de la première charnière, ladite seconde portion de tube **114** pousse sur la gaine **254** tandis que la tête de câble du câble d'actionnement **252** reste sensiblement immobile. En conséquence, un effort de traction est exercé par le câble d'actionnement **252** sur la portion de verrouillage **235** de l'organe de déblocage **230** de la deuxième charnière **200.**

L'organe de déblocage **230** est entrainé en rotation par rapport à la seconde portion de tube **214** autour du troisième axe de pivotement **X₃** et est amené en position active. L'organe de déblocage **230** amène alors l'élément de blocage **20** de la deuxième charnière **200** de sa position fermée vers sa position ouverte autorisant ainsi le pliage de la deuxième charnière.

Dans cet exemple non limitatif, l'activation de l'organe de déblocage **230** est réalisée en poussant sur la gaine **254.** Alternativement, et sans sortir du cadre de l'invention, l'activation pourrait être réalisée en tirant sur le câble d'actionnement **252.**

## Revendications

1. Charnière (10) pour un vélo pliant, ladite charnière comprenant :
- une première portion de tube (12);
- une seconde portion de tube (14) montée pivotante par rapport à la première portion de tube autour d'un premier axe de pivotement (X₁) entre une position dépliée et une position pliée;
- un élément de blocage (20) monté pivotant à la première portion de tube autour d'un deuxième axe de pivotement (X₂), l'élément de blocage ayant au moins une position fermée dans laquelle il maintient la seconde portion de tube en position dépliée et une position ouverte dans laquelle il permet le déplacement en position pliée de la seconde portion de tube par pivotement de ladite seconde portion de tube par rapport à la première portion de tube autour du premier axe de pivotement; et
- un organe de déblocage (30) ayant une position de repos et une position active, l'organe de déblocage étant configuré pour amener l'élément de blocage de sa position fermée vers sa position ouverte lorsqu'il est placé en position active,
**caractérisée par**
l'organe de déblocage (30) comprenant une portion de tirage (34), et la charnière (10) comprenant un dispositif d'actionnement (50) de l'organe de déblocage, configuré pour tirer sur ladite portion de tirage de l'organe de déblocage afin d'amener ce dernier en position active.

2. Charnière selon la revendication 1, comprenant un dispositif de rappel (56) configuré pour amener l'organe de déblocage (30) de la position active vers la position de repos, lorsque le dispositif d'actionnement (50) n'est pas actionné.

3. Charnière selon la revendication 1 ou 2, dans laquelle l'organe de déblocage (30) est monté pivotant par rapport à la seconde portion de tube (14) autour d'un troisième axe de pivotement (X₃), parallèle au deuxième axe de pivotement (X₂) de l'élément de blocage.

4. Charnière selon la revendication 3, dans laquelle la seconde portion de tube (14) comprend une portion de montage (16) définissant un logement (18), l'organe de déblocage (30) étant monté pivotant sur ladite portion de montage et s'étendant au moins en partie dans ledit logement.

5. Charnière selon la revendication 4, dans laquelle la portion de montage (16) fait saillie depuis une surface extérieure (14a) de la seconde portion de tube (14).

6. Charnière selon la revendication 4 ou 5, dans laquelle la portion de montage (16) s'étend au moins en partie à l'intérieur de la seconde portion de tube (14).

7. Charnière selon l'une quelconque revendication 1 à 6, dans laquelle l'organe de déblocage (30) comprend une portion de poussée (32) configurée pour pousser l'élément de blocage afin d'amener ledit élément de blocage de sa position fermée vers sa position ouverte, lorsque l'organe de déblocage est amené de sa position de repos vers sa position active.

8. Charnière selon la revendication 3, dans laquelle la portion de tirage (34) de l'organe de déblocage (30) s'étend radialement depuis le troisième axe de pivotement (X₃), de sorte que l'organe de déblocage est entrainé en rotation autour du troisième axe de pivotement lorsque le dispositif d'actionnement (50) tire sur ladite portion de tirage.

9. Charnière selon les revendications 7 et 8, dans laquelle l'organe de déblocage (30) comprend une portion coudée (36) située entre la portion de tirage (34) et la portion de poussée (32), ladite portion coudée étant traversée par le troisième axe de pivotement (X₃).

10. Charnière selon l'une quelconque des revendications 1 à 9, dans laquelle le dispositif d'actionnement (50) comprend un organe de commande (54) et une portion de câble (52) ayant une première extrémité (52a) reliée à l'organe de commande et une seconde extrémité (52b) reliée à la portion de tirage de l'organe de déblocage.

11. Charnière selon la revendication 10, dans laquelle l'organe de commande (54) présente la forme d'un levier configuré pour être monté à proximité du guidon du vélo pliant.

12. Charnière selon l'une quelconque des revendications 1 à 11, dans laquelle l'élément de blocage (20) comprend une portion de réception (39) et dans laquelle l'organe de déblocage (30) comprend en outre une portion de verrouillage (35) configurée pour coopérer avec la portion de réception afin de maintenir l'élément de blocage (20) en position fermée lorsque l'organe de déblocage est en position de repos.

13. Charnière selon la revendication 12, dans laquelle la portion de verrouillage (35) et la portion de réception (39) sont configurées de sorte que la coopération entre ladite portion de verrouillage et ladite portion de réception est interrompue lorsque l'organe de déblocage (30) est amené en position active.

14. Charnière selon la revendication 12 ou 13, dans laquelle la portion de réception (39) comprend un épaulement (41) et dans laquelle la portion de verrouillage (35) présente la forme d'un crochet comprenant une partie d'engagement (37) configurée pour coopérer avec ledit épaulement lorsque l'organe de déblocage est en position de repos.

15. Charnière selon la revendication 14, dans laquelle, considérés dans un plan perpendiculaire au deuxième axe de pivotement (X₂), ledit épaulement (41) et ladite partie d'engagement (37) s'étendent radialement par rapport à un cercle ayant pour centre le deuxième axe de pivotement (X₂) et passant par ladite portion de verrouillage (35).

16. Vélo pliant comprenant au moins une première charnière selon l'une quelconque des revendications 1 à 15.

17. Vélo pliant selon la revendication 16, comprenant en outre une deuxième charnière (200) selon l'une quelconque des revendications 1 à 15, le dispositif d'actionnement (250) de l'organe de déblocage de cette deuxième charnière comprenant un câble d'actionnement (252) présentant une première partie d'extrémité (252a) fixée à l'une des première et seconde portions de tube de ladite première charnière, et une seconde partie d'extrémité (252b) reliée à l'organe de déblocage (230) de la deuxième charnière, ledit dispositif d'actionnement de l'organe de déblocage de la deuxième charnière étant configuré pour amener l'organe de déblocage de la deuxième charnière en position active lors du pivotement de la seconde portion de tube de la première charnière par rapport à la première portion de tube de la première charnière.

## Patentansprüche

1. Scharnier (10) für ein Klapprad, das Scharnier umfassend: einen ersten Rohrabschnitt (12);
- einen zweiten Rohrabschnitt (14), der in Bezug auf den ersten Rohrabschnitt schwenkbar um eine erste Schwenkachse (X₁) zwischen einer aufgeklappten Position und einer eingeklappten Position schwenkbar montiert ist;
- ein Arretierelement (20), das an dem ersten Rohrabschnitt schwenkbar um eine zweite Schwenkachse (X₂) montiert ist, wobei das Arretierelement mindestens eine geschlossene Position, in der es den zweiten Rohrabschnitt in einer aufgeklappten Position hält, und eine offene Position, in der es die Bewegung des zweiten Rohrabschnitts durch Schwenken des zweiten Rohrabschnitts in Bezug auf den ersten Rohrabschnitt um die erste Schwenkachse in die eingeklappte Position ermöglicht; und
- ein Löseglied (30), das eine Ruheposition und eine aktiven Position aufweist, wobei das Löseglied konfiguriert ist, um das Arretierelement aus seiner geschlossenen Position in seine offene Position zu bringen, wenn es in die aktive Position gebracht wird,
**dadurch gekennzeichnet, dass** das Löseglied (30) einen Ziehabschnitt (34) umfasst, und das Scharnier (10) umfassend eine Betätigungseinrichtung (50) für das Löseglied, die konfiguriert ist, um an dem Ziehabschnitt des Löseglieds zu ziehen, um letzteres in die aktive Position zu bringen.

2. Scharnier nach Anspruch 1, umfassend eine Rückholvorrichtung (56), die konfiguriert ist, um das Löseglied (30) aus der aktiven Position in die Ruheposition zu bringen, wenn die Betätigungsvorrichtung (50) nicht betätigt wird.

3. Scharnier nach Anspruch 1 oder 2, wobei das Löseglied (30) in Bezug auf den zweiten Rohrabschnitt (14) schwenkbar um eine dritte Schwenkachse (X₃) parallel zu der zweiten Schwenkachse (X₂) des Arretierelements montiert ist.

4. Scharnier nach Anspruch 3, wobei der zweite Rohrabschnitt (14) einen Montageabschnitt (16) umfasst, der ein Gehäuse (18) definiert, wobei das Löseglied (30) schwenkbar an dem Montageabschnitt montiert ist und sich zumindest teilweise in das Gehäuse erstreckt.

5. Scharnier nach Anspruch 4, wobei der Montageabschnitt (16) von einer Außenfläche (14a) des zweiten Rohrabschnitts (14) hervorsteht.

6. Scharnier nach Anspruch 4 oder 5, wobei sich der Montageabschnitt (16) zumindest teilweise innerhalb des zweiten Rohrabschnitts (14) erstreckt.

7. Scharnier nach einem der Ansprüche 1 bis 6, wobei das Löseglied (30) einen Drückabschnitt (32) umfasst, der konfiguriert ist, um das Arretierelement zu drücken, um das Arretierelement aus seiner geschlossenen Position in seine offene Position zu bringen, wenn das Löseglied aus seiner Ruheposition in seine aktive Position gebracht wird.

8. Scharnier nach Anspruch 3, wobei sich der Ziehabschnitt (34) des Löseglieds (30) radial von der dritten Schwenkachse (X₃) erstreckt, sodass das Löseglied um die dritte Schwenkachse in Drehung versetzt wird, wenn die Betätigungsvorrichtung (50) an dem Ziehabschnitt zieht.

9. Scharnier nach den Ansprüchen 7 und 8, wobei das Löseglied (30) einen abgewinkelten Abschnitt (36) umfasst, der sich zwischen dem Ziehabschnitt (34) und dem Drückabschnitt (32) befindet, wobei der abgewinkelte Abschnitt von der dritten Schwenkachse (X₃) durchquert wird.

10. Scharnier nach einem der Ansprüche 1 bis 9, wobei die Betätigungsvorrichtung (50) ein Betätigungsglied (54) und einen Kabelabschnitt (52) umfasst, der ein erstes Ende (52a), das mit dem Betätigungsglied verbunden ist, und ein zweites Ende (52b), das mit dem Ziehabschnitt des Löseglieds verbunden ist, aufweist.

11. Scharnier nach Anspruch 10, bei dem das Betätigungsglied (54) die Form eines Hebels aufweist, der konfiguriert ist, um in der Nähe der Lenkstange des Klappfahrrads montiert zu sein.

12. Scharnier nach einem der Ansprüche 1 bis 11, wobei das Arretierelement (20) einen Aufnahmeabschnitt (39) umfasst und wobei das Löseglied (30) ferner einen Verriegelungsabschnitt (35) umfasst, der konfiguriert ist, um mit dem Aufnahmeabschnitt zusammenzuwirken, um das Arretierelement (20) in der geschlossenen Position zu halten, wenn das Löseglied in der Ruheposition ist.

13. Scharnier nach Anspruch 12, wobei der Verriegelungsabschnitt (35) und der Aufnahmeabschnitt (39) konfiguriert sind, sodass das Zusammenwirken zwischen dem Verriegelungsabschnitt und dem Aufnahmeabschnitt unterbrochen wird, wenn das Löseglied (30) in die aktive Position gebracht wird.

14. Scharnier nach Anspruch 12 oder 13, wobei der Aufnahmeabschnitt (39) eine Schulter (41) umfasst, und wobei der Verriegelungsabschnitt (35) die Form eines Hakens aufweist, umfassend einen Eingriffsabschnitt (37), der konfiguriert ist, um mit der Schulter zusammenzuwirken, wenn das Löseglied in Ruhestellung ist.

15. Scharnier nach Anspruch 14, wobei, sich die Schulter (41) und der Eingriffsabschnitt (37), betrachtet in einer Ebene senkrecht zu der zweiten Schwenkachse (X₂), radial in Bezug auf einen Kreis erstrecken, der als Mittelpunkt die zweite Schwenkachse (X₂) aufweist und durch den Verriegelungsabschnitt (35) verläuft.

16. Klappfahrrad, umfassend mindestens ein erstes Scharnier nach einem der Ansprüche 1 bis 15.

17. Klappfahrrad nach Anspruch 16, ferner umfassend ein zweites Scharnier (200) nach einem der Ansprüche 1 bis 15, die Betätigungsvorrichtung (250) des Löseglieds dieses zweiten Scharniers umfassend ein Betätigungskabel (252), das ein erstes Endteil (252a), das an einem von dem ersten und dem zweiten Rohrabschnitt des ersten Scharniers befestigt ist, und ein zweites Endteil (252b), das mit dem Löseglied (230) des zweiten Scharniers verbunden ist, aufweist, wobei die Betätigungsvorrichtung des Löseglieds des zweiten Scharniers konfiguriert ist, um das Löseglied des zweiten Scharniers bei Schwenken des zweiten Rohrabschnitts des ersten Scharniers in Bezug auf den ersten Rohrabschnitt des ersten Scharniers in eine aktive Position zu bringen.

## Claims

1. A hinge (10) for a folding bicycle, said hinge comprising:
- a first tube portion (12);
- a second tube portion (14) mounted pivotably with respect to the first tube portion about a first axis of pivot (X₁) between an unfolded position and a folded position;
- a locking element (20) mounted pivotably to the first tube portion about a second axis of pivot (X₂), the locking element having at least one closed position in which it retains the second tube portion in the unfolded position and an open position in which it allows the displacement in the folded position of the second tube portion by the pivoting of said second tube portion with respect to the first tube portion about the first axis of pivot; and
- an unlocking member (30) having an neutral position and an active position, the unlocking member being configured to bring the locking element from its closed position into its open position when it is placed in the active position,
**characterized by** the unlocking member (30) comprising a pulling portion (34), and the hinge (10) comprising an actuating device (50) for actuating the unlocking member, configured to pull on said pulling portion of the unlocking member in order to bring the latter into the active position.

2. The hinge according to claim 1, comprising a return device (56) configured to bring the unlocking member (30) from the active position into the neutral position, when the actuating device (50) is not actuated.

3. The hinge according to claim 1 or 2, wherein the unlocking member (30) is mounted pivotably with respect to the second tube portion (14) about a third axis of pivot (X₃), parallel to the second axis of pivot (X₂) of the locking element.

4. The hinge according to claim 3, wherein the second tube portion (14) comprises a mounting portion (16) defining a housing (18), the unlocking member (30) being mounted pivotably on said mounting portion and extending at least in part in said housing.

5. The hinge according to claim 4, wherein the mounting portion (16) protrudes from an outer surface (14a) of the second tube portion (14).

6. The hinge according to claim 4 or 5, wherein the mounting portion (16) extends at least in part inside the second tube portion (14).

7. The hinge according to any one of claims 1 to 6, wherein the unlocking member (30) comprises a pushing portion (32) configured to push the locking element in order to bring said locking element from its closed position into its open position, when the unlocking member is brought from its neutral position into its active position.

8. The hinge according to claims 3, wherein the pulling portion (34) of the unlocking member (30) extends radially from the third axis of pivot (X₃), such that the unlocking member is rotationally driven about the third axis of pivot when the actuating device (50) pulls on said pulling portion.

9. The hinge according to claims 7 and 8, wherein the unlocking member (30) comprises an elbow portion (36) located between the pulling portion (34) and the pushing portion (32), said elbow portion being traversed by the third axis of pivot (X₃).

10. The hinge according to any one of claims 1 to 9, wherein the actuating device (50) comprises a control member (54) and a cable portion (52) having a first end (52a) linked to the control member and a second end (52b) linked to the pulling portion of the unlocking member.

11. The hinge according to claim 10, wherein the control member (54) has the shape of a lever configured to be mounted near the handlebar of a folding bicycle.

12. The hinge according to one any of claims 1 to 11, wherein the locking element (20) comprises a receiving portion (39) and wherein the unlocking member (30) further comprises a locking portion (35) configured to interact with the receiving portion in order to retain the locking element (20) in the closed position when the unlocking member is in the neutral position.

13. The hinge according to claim 12, wherein the locking portion (35) and the receiving portion (39) are configured such that the interaction between said locking portion and said receiving portion is interrupted when the unlocking member (30) is brought into the active position.

14. The hinge according to claim 12 or 13, wherein the receiving portion (39) comprises a shoulder (41) and wherein the locking portion (35) has the shape of a hook comprising an engaging part (37) configured to interact with said shoulder when the unlocking member is in the neutral position.

15. The hinge according to claim 14, wherein, considered in a plane perpendicular to the second axis of pivot (X₂), said shoulder (41) and said engaging part (37) extend radially with respect to a circle having as center the second axis of pivot (X₂) and passing through said locking portion (35).

16. A folding bicycle comprising at least one first hinge according to any one of claims 1 to 15.

17. The folding bicycle according to claim 16, further comprising a second hinge (200) according to any one of claims 1 to 15, the device (250) for actuating the unlocking member of this second hinge comprising an actuating cable (252) having a first end part (252a) attached to one of the first and second tube portions of said first hinge, and a second end part (252b) linked to the unlocking member (230) of the second hinge, said device for actuating the unlocking member of the second hinge being configured to bring the unlocking member of the second hinge into the active position when the second tube portion of the first hinge pivots with respect to the first tube portion of the first hinge.
